# EUROPÄISCHE PATENTANMELDUNG

(11) **EP 0 969 401 A2**
(43) Veröffentlichungstag der Anmeldung: **05.01.2000**
(21) Anmeldenummer: 99112356.3
(22) Anmeldetag: 23.06.1999
(51) Int. Cl.: G06K 7/00, G06K 19/07

(54) **Vorrichtung zur batterielos betriebenen aktiven Funkübertragung von Zählerständen**

(30) Priorität: 30.06.1998 DE 19829213
(71) Anmelder: SIEMENS AKTIENGESELLSCHAFT, 80333 München (DE)
(72) Erfinder: Schmidt, Frank, 85604 Pöring (DE); Vontz, Thomas, Dr., 81539 München (DE); Jena, von, Alexander, Dr., 81541 München (DE); Sczesny, Oilver, 85609 Aschheim (DE)

(57) **Zusammenfassung**

Vorrichtung mit einem mechanischen Zählwerk (23, 24, 25) für (Verbrauchs-)Mengen (22) und mit einem batterielos zu betreibenden, aktiv sendenden Oberflächenwellen-Funksensor-Bauelement (11). Die ausgesandten Funksignale (112) enthalten die Zählwerksinformation zur Registrierung derselben in einer entfernt positionierten (zentralen) Empfangseinheit (2).

## Beschreibung

Die vorliegende Erfindung bezieht sich auf die konstruktive Ausbildung einer batterielosen Vorrichtung zur aktiven Funkübertragung von Meßgrößen, insbesondere von Zählerständen.

Im Wirtschaftsleben ist es üblich, Verbrauchswerte und dgl. zweck finanzieller Abrechnung zu erfassen. Dazu bedarf es des Ablesens von Zählereinrichtungen, die in der Regel im Bereich des Verbrauchers positioniert sind. Seit längerer Zeit ist es das Ziel, das Ablesen von Zählerständen des elektrischen Verbrauchs, der Wärmeabnahme aus einer zentralen Heizungsanlage und dgl. in der Weise zu erfassen, daß dies durch Fernabfrage auszuführen ist. Zum Beispiel sind in WO96/33423 und der Anmeldung, Aktenzeichen PCT/DE/98/00403 Übertragungsprinzipien beschrieben, mit denen es möglich ist, ohne Einsatz einer Batterie als Stromquelle vor Ort per Funk ein Übermitteln physikalischer Meßgrößen an einen entfernten Empfangsort auszuführen. Am Ort des Auftretens der Meßgröße ist ein als Funksensor bezeichnetes elektronisches Bauteil, nämlich ein Oberflächenwellen-Bauteil vorgesehen, das aktiv ein Funksignal auszusenden vermag, das mit dem Meßwert für dessen Auslesen codiert/moduliert ist. Eine Vorrichtung dieses Prinzips ist vorteilhaft gegenüber anderweitig bekannten Vorrichtungen, bei denen auf der Seite des Auftretens der Meßgröße ein Funksender mit Batteriespeisung vorgesehen ist.

Die in der obengenannten PCT-Anmeldung beschriebene Anordnung bzw. das dort dargelegte Prinzip aktiver Funkübermittlung ohne Batteriespeisung besteht darin, daß die zu erfassende Meßgröße des Verbrauchs, d.h. die meßtechnisch zu erfassende Energie, auch dazu herangezogen wird, den aus dieser Druckschrift bekannten Funksensor so zu speisen, daß durch Ausnutzung eines systemeigenen Akkumulierungsprozesses in Zeitabständen aktiv informationstragende Funksignale ausgesandt werden können. Diese Funksignale werden dann an entferntem Sammelort empfangen und, wie bekannt, der weiteren Meßwerterfassung und ggfs. finanziellen Bewertung zugeführt.

Das eigentliche, das Funksignal aussendende Bauteil ist ein aus obigem Stand der Technik bekanntes Oberflächenwellen-Bauteil. In einer elektronischen Schaltung ist diesem ein Hochfrequenzfilter im Stand der Technik beschriebener Art vorgeschaltet, das eine Selektion von Hochfrequenzenergie zusammen mit dem Oberflächenwellen-Bauteil ausführt. Diesem Hochfrequenzfilter wird periodisch ein Hochfrequenzsignal zugeführt, das unmoduliert mittels eines nicht-linearen Bauelementes, insbesondere einer Funkenstrecke, aus dieser zugeführter hochgespannter elektrischer Energie erzeugt wird. Diese hochgespannte elektrische Energie wiederum wird nach dem Prinzip der Piezoelektrizität oder der Pyroelektrizität erzeugt. Dieses Prinzip besteht darin, daß aus zugeführter mechanischer Bewegungsenergie bzw. thermische Energie piezoelektrisch oder pyroelektrisch eine Hochspannung erzeugt wird, die in z.B. der Funkenstrecke einen Funkenüberschlag bewirkt, mit dem das Auftreten eines Hochfrequenzsignals einhergeht.

Für diese Speisung des Hochfrequenzfilters bzw. des Oberflächenwellen-Bauteils bedarf es also einer mechanischen oder thermischen Energie, die insbesondere aus derjenigen Energie abzuzweigen ist, die mit der erfindungsgemäßen Vorrichtung meßtechnisch, z.B. zur Verbrauchsberechnung, zu erfassen ist.

Zum Beispiel ist in Verbindung mit dieser Verbrauchsenergie immanent eine Flüssigkeitsströmung verbunden. Ein Beispiel dafür ist das fließende warme Wasser einer Wasser-Zentralheizung oder auch nur fließendes Leitungswasser.

Bei der Wärmeverbrauchsmessung in Heizungsanlagen wird meßtechnisch sowohl die durchfließende Flüssigkeitsmenge als auch deren jeweilige Temperatur meßtechnisch erfaßt. Die fließende Flüssigkeitsmenge wird mit konventionellen Flügelradzählern erfaßt, die in den Flüssigkeitsstrom eingebaut sind.

Flügelradzähler umfassen im Regelfall ein mechanisches Zählwerk, das über ein mechanisches Getriebe angetrieben wird. Aufgabe der vorliegenden Erfindung ist es, Maßnahmen anzugeben, mit deren Hilfe sich eine Vorrichtung konstruieren läßt, in/mit der eine Umsetzung der physikalischen Meßgröße in eine solche Form zu realisieren ist, daß ein wie beschriebenes Oberflächenwellen-Bauteil mit vorgeschaltetem Hochfrequenzfilter die umgesetzte Meßgröße auf dem Funkwege aktiv fernübertragen kann.

Diese Aufgabe wird mit den Maßnahmen des Patentanspruches 1 gelöst und weitere Ausgestaltungen gehen aus den Unteransprüchen hervor.

Den einzelnen Ausführungsvarianten der Erfindung ist gemeinsam, daß der Vorrichtung mit dem Oberflächenwellen-Bauteil, dem Hochfreguenzfilter sowie dem nicht-linearen Bauelement, z.B. der Funkenstrecke, als Energielieferant für die Speisung des Hochfrequenzfilters und damit des Oberflächenwellen-Bauteils ein Piezoelement oder ein Pyroelement hinzugefügt ist. Beide solche Elemente erzeugen bei mechanischer Stoßbelastung bzw. Temperaturänderung derselben elektrische Hochspannung, die in der z.B. Funkenstrecke einen Funkenüberschlag mit Hochfreguenzsignalerzeugung bewirkt.

Eine Variante der Ausführung der Erfindung besteht darin, daß über ein Getriebe mechanische Energie, die für das mechanische Zählwerk bekannter Art ohnehin vorhanden ist, ein Anteil zur Anregung eines Piezoelements abgezweigt wird. Wie schon oben gesagt, ist das Zählwerk mit einem Flügelradzähler in konventioneller Weise funktionell verbunden. Für den Antrieb des Piezoelements eignet sich z.B. Nockenwellenantrieb, Sägezahnantrieb oder dergleichen.

Anstelle eines piezoelektrischen Elements kann ein pyroelektrisches Element zur Hochspannungserzeugung verwendet werden, wenn wechselnde Temperaturen auftreten. Bei Heizkörpern mit thermostatischer Regelung treten Temperaturänderungen auf, die durchaus für die erfindungsgemäßen Zwecke ausreichend groß sind. In diesem Falle ist das zu verwendende Pyroelement mit dem Heizkörper wärmemäßig zu koppeln. Weitere Einzelheiten dazu sind dem Stand der Technik zu entnehmen.

Für die schon erwähnte Realisierung der Umsetzung des erfaßten Meßwertes in eine signalmodulierende/-codierende Form ist als eine Ausführungsform der Erfindung eine Einrichtung vorgesehen, die ein Array mit magnetfeldgesteuerten Schaltern, z.B. Reed-Kontakten, und eine zu betreibende Magnetcode-Steuerung für diesen Schalter umfaßt.

Weitere Erläuterungen zur Erfindung werden anhand von Figuren gegeben.
- Figur 1: zeigt das Prinzip einer ersten Ausführungsform der Erfindung.
- Figur 2: zeigt das Prinzip einer zweiten Ausführungsform der Erfindung und Figur 2a ein Schema für Ausführung einer Codierung.

Mit 11 ist das Oberflächenwellen-Bauteil, mit 12 das Hochfrequenzfilter, mit 13 das nicht-lineare Bauelement und mit 14 ein Piezoelement bezeichnet, wie sie bereits voranstehend beschrieben und wenigstens für sich genommen aus dem Stand der Technik hinlänglich bekannt sind. Mit 21 ist dem Prinzip nach ein Flügelrad-Durchflußmesser bezeichnet. Das von der Strömung 22 angetriebene Flügelrad 23 ist mit einem mechanischen Zählwerk 24 verbunden, das über die Flügelradumdrehungen die durchströmte Menge (Wasser oder sonstige Flüssigkeitsmenge) meßtechnisch erfaßt. Das an das Getriebe des mechanischen Zählwerks 24 (mechanisch) angekoppelte Getriebe 25 ist so ausgeführt, daß es eine sägezahnartige mechanische Bewegung auf der Abtriebsseite ausführt. Mit dieser abtriebsseitigen mechanischen Bewegung wird das Piezoelement 14 bekanntermaßen derart angeregt, daß im wesentlichen periodisch aufeinanderfolgend nach zunächst erfolgter mechanischer Belastung des Piezoelements 14 eine mehr oder weniger schlagartige mechanische Entlastung desselben eintritt. Im Zeitpunkt der schlagartigen Entlastung erzeugt das Piezoelement bekanntermaßen eine Hochspannung, die in der nachgeschalteten Funkenstrecke 13 zu einem Funkenüberschlag mit entsprechender Hochfreguenzoszillation führt. Anstelle einer schlagartigen Entlastung kann auch eine entsprechend rasche mechanische Belastung des Piezoelements vorgesehen sein, was jedoch im Regelfall technisch schwieriger auszuführen ist.

Das Hochfrequenzsignal der Funkenstrecke wird in das Hochfrequenzfilter 12 gegeben, das dann bekannterweise das Oberflächenwellen-Bauteil 11 zu einer Aussendung eines codierten Impulses als Funksignal 111 anregt. Die Identitäts-Codierung des Oberflächenwellen-Bauteils 11 ist, wie bekannt, immanent in dieses eingeprägt. Mit 112 ist symbolisch der Hochfrequenz-Sendeimpuls mit Identitätscode des Oberflächenwellen-Bautelis 11 gezeigt. Dieser Hochfrequenzimpuls 112 gelangt auf dem Funkweg zur zentralen Empfangseinheit 2 am Empfangsort, in der die Verarbeitung der empfangenen Hochfrequenzsignale erfolgt. Zur Verbrauchsmengenerfassung werden z.B. diese Empfangsimpulse aufsummiert.

Die erfaßte (Verbrauchs-)Menge wird z.B. in der Weise registriert, daß nach jeweils vorgebbarer Anzahl der Flügelradumdrehungen (23) ein jeweiliger Spannungsimpuls des Piezoelements 14 zwangsweise ausgelöst wird und die Anzahl der Funk-Impulse 112 ein Maß für die Flügelradumdrehungen und damit ein Maß für die Durchflußmenge der Strömung 22 ist.

In an sich bekannter Weise kann mit dem Oberflächenwellen-Bauteil 11 auch zusätzlich noch die Temperatur der Durchflußmasse 22 direkt oder indirekt gemessen/erfaßt werden und in den Hochfrequenzimpuls 112 als zusätzliche Information zur Auswertung in der Empfangseinheit 2 eingefügt sein. Ein solches Oberflächenwellen-Bauteil kann so ausgeführt sein, daß es temperaturabhängig veränderte Funksignale abgibt und die darin enthaltene Veränderung als Temperaturinformation auszuwerten ist.

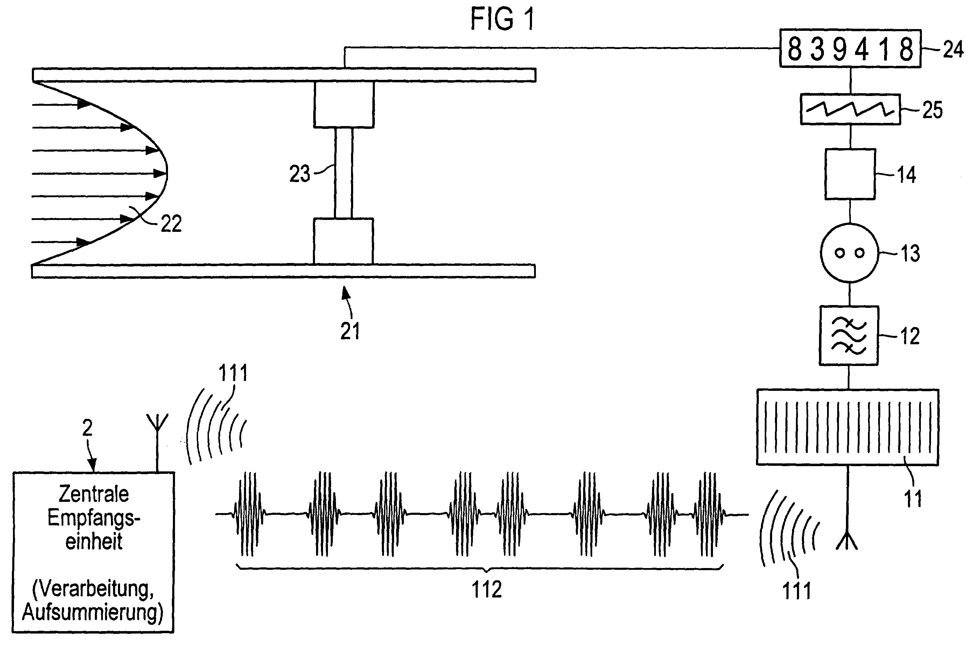

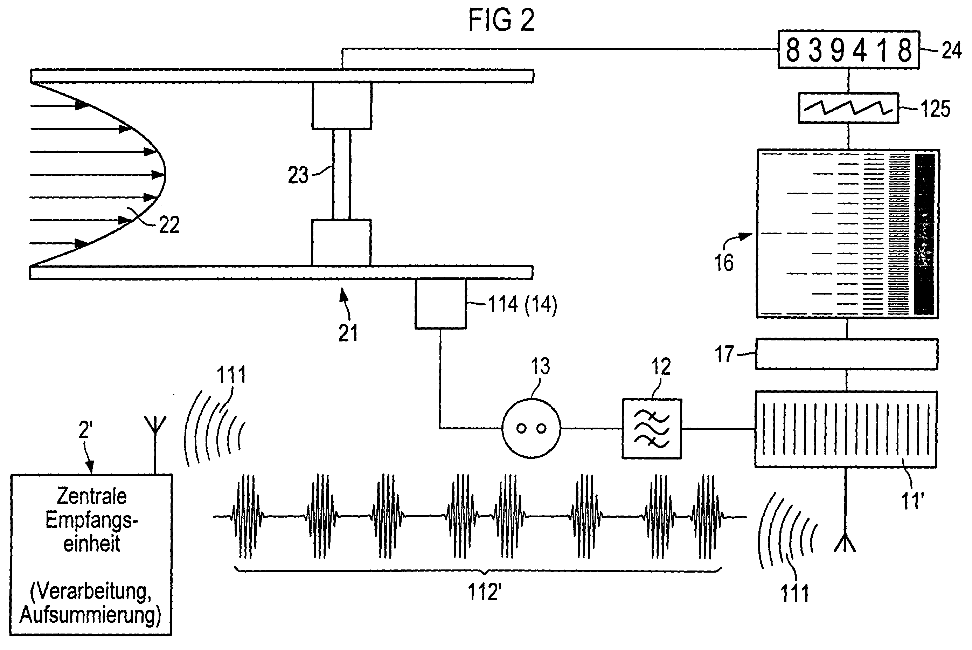

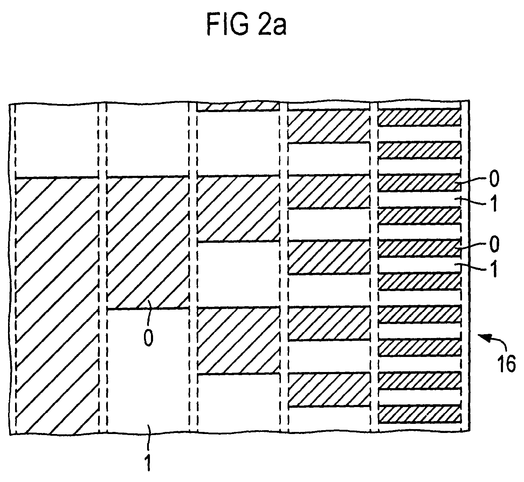

Figur 2 zeigt das Prinzip einer zweiten Ausführungsform der Erfindung. In Figur 2 enthaltene und zur Figur 1 bereits erläuterte Bezugszeichen haben für die Vorrichtung der Figur 2 dieselbe oder äquivalente Bedeutung wie in der Vorrichtung nach Figur 1.

Das Element 114 der Ausführungsform der Figur 2 ist ein Pyroelement und kann auch ein Piezoelement, wie es zur Figur 1 mit 14 bezeichnet ist, sein. Das Pyroelement, das bei eintretenden Temperaturwechseln desselben eine elektrische Pyrospannung erzeugt, liefert vergleichsweise der Ausführung nach Figur 1 Hochspannungsimpulse an das nicht-lineare Bauelement, z.B. die Funkenstrecke 13 mit dem schon oben beschriebenen Ergebnis des Entstehens eines Hochfrequenzsignals aus dem Funkenüberschlag. Arbeitsweise, Wirkungsweise und besondere Ausgestaltungen einer solchen pyroelektrischen Hochspannungserzeugung sind z.B. der Patentanmeldung 19822781 zu entnehmen. Voraussetzung für das Funktionieren der pyroelektrischen Spannungserzeugung ist das Auftreten zeitlich sich ändernder Temperaturzustände. Anstelle der mit dem Pyroelement 114 bewirkten Hochspannungserzeugung kann auch bei der Ausführungsform nach Figur 2 piezoelektrische Hochspannungserzeugung mit entsprechender mechanischer Erregung eines stattdessen vorgesehenen Piezoelements (wie oben beschrieben) vorgesehen sein.

Die Ausführungsform nach Figur 2 unterscheidet sich von der Ausführungsform nach Figur 1 auch darin, daß das Funksignal 112' nicht nur den Identifizierungscode des betreffenden Oberflächenwellen-Bauteils 11' sondern auch noch ein Informationssignal über die erfaßte physikalische Meßgröße, z.B. Durchflußmenge, enthält. Dies erfordert eine Übersetzung der Information aus dem mechanischen Zählwerk 24 in eine steuerbare (zusätzliche) Codierung des Oberflächenwellen-Bauteils 11' . Eine Ausführungsform für diese Übersetzung zeigt die Figur 2 mit einer Zylinderwalze 16 und einem Reed-Relais-Array (als ein Ausführungsbeispiel dafür). Ein solches Array hat eine Anzahl elektrisch paralleler Kontaktpaare, die jeweils einzel ansteuerbar magnetisch gesteuert zu öffnen und zu schließen sind.

Figur 2a zeigt einen Ausschnitt der abgewickelten Oberfläche der Walze 16. In der Figur spaltenweise sind die einzelnen Stellen der jeweiligen Binärzahl des Codes angeordnet. Die Elemente O und 1 sind in der jeweiligen Spalte durch unterschiedliche Magnetisierung realisiert, z.B. auch durch jeweils entgegengesetzt gerichtete Magnetisierung.

Mittels des an das mechanische Zählwerk 24 angekoppelten Getriebes 125 wird eine Zylinderwalze 16 angetrieben, deren Umdrehung/Umdrehungswinkel proportional den erfolgten Umdrehungen des Flügelrades 23 und damit proportional durchströmender Flüssigkeitsmenge 22 ist. Auf ihrer Mantelfläche trägt die Zylinderwalze magnetische Elemente für binäre Codierungen. Bei Umdrehungen der Zylinderwalze 16 läuft deren Mantelfläche an dem Reed-Relais-Array 17 entlang, dessen einzelne Relais und deren jeweiliges Kontaktpaar mittels der magnetischen Elemente der Codierung (der umlaufenden Walze 16) zu steuern sind. Der jeweils eine Kontaktanschluß eines Kontaktpaares des einzelnen Reed-Relais ist mit einem Reflektorelement bzw. einem Reflektorelement-Array des Oberflächenwellen-Bauteils 11' elektrisch verbunden. Der zugehörige jeweils andere Kontakt des Kontaktpaares ist mit einer ausgewählten Impedanz verbunden. Mit dem Schalten des Kontaktpaares des magnetisch angesteuerten Reed-Relais läßt sich so der elektrische Zustand des jeweils angesteuerten Reflektorelements/ Reflektorarrays steuern zwischen z.B. 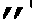 offen" und 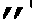 geschlossen" (reflektierend oder nicht-reflektierend). Beispiele für eine solche Ausführung programmierbarer Reflektoren eines Oberflächenwellen-Bauteils 11' sind auch Proceedings IEEE Ultrasonic Symposium (1993) P. 125-130 zu entnehmen. Auf diese Weise läßt sich eine auf der Mantelfläche der Zylinderwalze 16 aufgebrachte magnetische Codierung über das steuernd wirkende Reed-Relais-Array 17 als Impedanz-Steuerung wirksam auf das Oberflächenwellen-Bauteil 11' übertragen. Dieses enthält somit (zusätzlich zur immanenten Eigencodierung) noch eine für Zählzwecke zu verwendende steuerbare Codierung. Entsprechend enthalten also die den Identifizierungscode enthaltenden Hochfrequenzimpulse 112' des Oberflächenwellen-Bauteils 11' auch noch den jeweiligen Code, der sich aus der magnetischen Steuerung durch die Zylinderwalze 16 ergibt.

Für beide Ausführungsformen, Figur 1 und Figur 2, ist dann noch in an sich bekannter Weise eine Maßnahme vorzusehen, die im Empfangsgerät (am entfernten Ort) den Überlauf der Meßwert-Information der empfangenen Funksignale ausführt.

## Patentansprüche

1. Vorrichtung zur batterielos zu betreibenden Funkübertragung,
mit einer Meßvorrichtung (23) mit Zählwerk (24) und mit einem Oberflächenwellen-Bauteil (11, 11') als aktiv sendender Funksensor,
mit einer piezoelektrischen/pyroelektrischen Hochspannungserzeugung mit Hochfrequenzfilter (12, 13, 14, 114) zur Stromspeisung des Oberflächenwellen-Bauteils und
mit einer mechanischen Antriebsvorrichtung (23, 24, 25, 125) zur Erzeugung von Codierungsvorgängen für das auszusendende Funksignal (112, 112').

2. Vorrichtung nach Anspruch 1,
bei der die mechanische Antriebsvorrichtung (23, 24, 25) und das piezoelektrische Element (14) der Hochspannungserzeugung mechanisch so gekoppelt sind,
daß entsprechend dem Zählvorgang der Antriebsvorrichtung (24) von dieser das piezoelektrische Element (14) mechanisch taktweise zur Hochspannungserzeugung erregt wird und
mit den erzeugten Hochspannungsimpulsen über das Filter (12) der Funksensor (11) gesteuert zur Aussendung von sensoreigene Codierung enthaltenden Funksignalen angeregt wird.

3. Vorrichtung nach Anspruch 1,
bei der die mechanische Antriebsvorrichtung (23, 24, 125) mit einer Codiervorrichtung gekoppelt ist, die eine mit magnetischer Codierung versehene Zylinderwalze (16) und ein Reed-Relais-Array (17) umfaßt, das mit der Codierung der Zylinderwalze bei Rotation derselben taktweise zu steuern ist und
bei der mit den Kontaktpaaren des Reed-Relais-Arrays (17) Reflektoren des Oberflächenwellen-Bauteils (11') verbunden sind, um diese Reflektoren der Umdrehung der Zylinderwalze (16) entsprechend impedanzmäßig zu steuern, damit das vom Oberflächenwellen-Bauteil (11') ausgesandte Funksignal (112') die augenblickliche, mit der Stellung der Zylinderwalze bewirkte Codierung des Oberflächenwellen-Bauteils 11' als Informationsinhalt enthält.
